(19) Europäisches Patentamt

European Patent Office

Office européen des brevets

(11) **EP 3 848 432 A1**

(12) **EUROPEAN PATENT APPLICATION**

(43) Date of publication:
**14.07.2021 Bulletin 2021/28**

(51) Int Cl.:
*C09J 123/08* (2006.01)      *C08F 210/02* (2006.01)
*C08F 220/14* (2006.01)      *C08F 220/12* (2006.01)
*C08F 230/08* (2006.01)

(21) Application number: **20382011.3**

(22) Date of filing: **10.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Borealis AG**
**1220 Vienna (AT)**

(72) Inventors:
• **Ek, Carl-Gustaf**
**444 86 Stenungsund (SE)**

• **Yalalov, Denis**
**444 86 Stenungsund (SE)**
• **Martín-Martínez, José Miguel**
**03560 Alicante (ES)**
• **Fuensanta-Soriano, Mónica**
**03560 Alicante (ES)**

(74) Representative: **Maiwald Patent- und
Rechtsanwaltsgesellschaft mbH
Engineering
Elisenhof
Elisenstrasse 3
80335 München (DE)**

(54) **ADHESIVE**

(57)      The disclosure relates to an adhesive composition, comprising (a) 60 to 95 wt% of an ethylene terpolymer resin containing (i) 55 to 91.5 wt% of units derived from ethylene of the total weight of the ethylene terpolymer resin (a), (ii) 8 to 35 wt% of $(C_{1-6})$-alkyl acrylate and/or $(C_{1-6})$-alkyl-$(C_{1-6})$-alkyl acrylate comonomer(s) of the total weight of the ethylene terpolymer resin (a), and (iii) 0.5 to 10 wt% silane group(s) containing comonomer of the total weight of the ethylene terpolymer resin (a); (b) 5 to 40 wt% of tackifying resin; (c) 0 to 30 wt% of plasticizer resin; (d) 0 to 3 wt% of antioxidant(s); and (e) 0 to 5 wt% of additives of the total weight (100 wt%) of the adhesive composition; wherein the melt flow rate $(MFR_2)$ of the ethylene terpolymer resin (a) is from 1 to 500 g/10 min as determined according to ISO 1133 and a load of 2.16 kg.

EP 3 848 432 A1

**Description**

FIELD OF THE DISCLOSURE

The present disclosure relates to an adhesive composition, and more particularly to an adhesive composition comprising copolymer of ethylene with $(C_{1-6})$-alkyl acrylate and/or $(C_{1-6})$-alkyl-$(C_{1-6})$-alkyl acrylate comonomer(s), and (iii) silane group(s) containing comonomer; and tackifying resin.

BACKGROUND OF THE DISCLOSURE

A hot melt adhesive composition is at room temperature a solid thermoplastic based composition that quickly melts upon heating and then sets to a firm bond upon cooling. A hot melt adhesive composition offers the possibility of almost instantaneous bonding which makes it an excellent candidate in automated production processes.

Typically a hot melt adhesive composition includes a polymer resin and other components like for example a tackifying resin, a plasticizer resin, additive(s) and/or filler(s). The polymer resin normally used in a hot-melt adhesive composition can be for example a polyolefin resin (ethylene- or propylene-based polymer resin), a functionalised polyolefin resin (ethylene or propylene copolymer with reactive groups), a styrene block copolymer resin, an ethylene vinyl acetate resin, etc.

Important characteristics of an adhesive composition include softening point, viscosity, open and set time, hardness, migration and blooming, resistance to discoloration and compatibility with other components of the formulation. Depending on the final application an appropriate adhesive composition is chosen so that it realizes the requirements for that specific final application.

When choosing an adhesive composition, the contribution of the polymer resin component is vital, in particular for the cohesion properties. The role of the polymer resin is to provide the backbone of the composition and provide the primary mechanical properties such as strength, both in tension and in shear, flexibility, elasticity, impact properties and the basis for the heat resistance of the adhesive. In addition to the cohesion properties, the polymer resin contributes to the adhesion properties based on the polymer structure and chemistry. The combination of both good cohesion and good adhesion of the adhesive composition, for a particular application and towards the substrates to be bonded, the bond and the practical adhesion properties, is very important for the function and performance of the bond.

E.g. WO2018099816 discloses ethylene polymer compositions for use in adhesive applications.

One of the problems with hot melt adhesive composition is the need to use high amount of tackifiers, oils and waxes, e.g. the composition consists often even 50 wt% or more of components other than the base polymer. There exist a need to minimise the necessity to add larger fractions of additional components in the adhesive composition in addition to the base polymer resin. This means, for example, that if the base polymer has a proper combination of cohesive and adhesive properties, there is no need to add large amount of tackifier resin to the composition. This is particularly important when the complex viscosity is low. Moreover, for many applications, it is essential to provide high probe tack with the adhesive composition. If this could be accomplished without addition of substantial amounts of tackifiers this is beneficial both related to costs, processability and bond performance.

BRIEF DESCRIPTION OF THE DISCLOSURE

An object of the present disclosure is to provide an adhesive composition comprising an ethylene terpolymer resin and use of the adhesive for implementing the adhesive composition in end application window so as to alleviate the above disadvantages.

The object of the disclosure is achieved by an adhesive composition, use of the adhesive composition and an article comprising the adhesive composition, which are characterized by what is stated in the independent claim[s]. The preferred embodiments of the disclosure are disclosed in the dependent claims.

The disclosure is based on the idea of providing an adhesive composition comprising a particular ethylene terpolymer resin (a) as defined herein and hereafter and particular further components (b) to (d) to provide cohesive and adhesive properties that are desirable for the adhesive compositions while maximizing the amount of the base ethylene polymer resin (a).

An advantage of the adhesive composition of the disclosure is that it provides a high maximum probe tack at an attractive temperature range, low complex viscosity and high peel strength, that are very desirable for the adhesive composition and thus enables the use of adhesive composition also in a wide temperature range under demanding service conditions and thereby provides a particular end application window to the adhesive composition. Another advantage of the adhesive composition is the ability to alter the adhesive and cohesive performance in a wide temperature range via adjustment of the polymer composition within defined ranges in combination with use of defined components, e.g. tackifier, in the final adhesive composition.

DETAILED DESCRIPTION OF THE DISCLOSURE

The disclosure relates to an adhesive composition comprising

(a) 60 to 95 wt% of an ethylene terpolymer resin containing

(i) 55 to 91.5 wt% of units derived from ethylene of the total weight of the ethylene terpolymer resin (a)
(ii) 8 to 35 wt% of $(C_{1-6})$-alkyl acrylate and/or $(C_{1-6})$-alkyl-$(C_{1-6})$-alkyl acrylate comonomer(s) of the total weight of the ethylene terpolymer resin (a), and
(iii) 0.5 to 10 wt% silane group(s) containing comonomer of the total weight of the ethylene terpolymer resin (a);

(b) 5 to 40 wt% of tackifying resin;
(c) 0 to 30 wt% of plasticizer resin;
(d) 0 to 3 wt% of antioxidant; and
(e) 0 to 5 wt% of additives

of the total weight (100 wt%) of the adhesive composition;
wherein the melt flow rate $(MFR_2)$ of the ethylene terpolymer resin (a) is less than 500 g/10 min as determined according to ISO 1133 and a load of 2.16 kg.
The disclosure further relates to use of said adhesive composition for the preparation of an article.
The disclosure also relates to an article comprising said adhesive composition on at least one surface of the article.

Ethylene terpolymer resin (a)

The amount of the ethylene terpolymer resin (a) in the adhesive composition is 60 to 95 wt%, preferably 62 to 90 wt%, more preferably 65 to 85 wt%, of the total weight (100 wt%) of the adhesive composition.
The ethylene terpolymer resin (a) provides the ability to use less additional components in the adhesive composition.
The ethylene terpolymer resin (a) comprises (i) 55 to 91.5 wt% of units derived from ethylene; (ii) 8 to 35 wt% of one or more $(C_{1-6})$-alkyl acrylate and/or $(C_{1-6})$-alkyl-$(C_{1-6})$-alkyl acrylate comonomer(s), and (iii) 0.5 to 10 wt% of silane group(s) containing comonomer of the total weight of the ethylene terpolymer resin (a). The ethylene terpolymer resin (a) preferably comprises (i) 60 to 90 wt% of units derived from ethylene.
The ethylene terpolymer resin (a) comprises, preferably consists of, (i) ethylene polymer containing (ii) $(C_{1-6})$-alkyl acrylate and/or $(C_{1-6})$-alkyl-$(C_{1-6})$-alkyl acrylate comonomer(s), and (iii) silane group(s) containing comonomer(s).
The term (i) ethylene polymer containing (ii) $(C_{1-6})$-alkyl acrylate and/or $(C_{1-6})$-alkyl-$(C_{1-6})$-alkyl acrylate comonomer(s), and (iii) silane group(s) containing comonomer(s) in particular refers to ethylene terpolymer having (ii) $(C_{1-6})$-alkyl acrylate and/or $(C_{1-6})$-alkyl-$(C_{1-6})$-alkyl acrylate comonomer(s) and (iii) silane group(s) containing comonomer(s) present in the ethylene terpolymer (a).
Unexpectedly, the ethylene terpolymer resin (a) has properties, in particular within temperature window ranging from -40 to 130 °C, which make the ethylene terpolymer resin (a) highly suitable for adhesive applications. In particular, the ethylene terpolymer resin (a) provides cohesive and adhesive properties, such as one or more of a high maximum probe tack at an attractive temperature range, low complex viscosity and high peel strength, that are very desirable for the hot melt adhesive compositions.
Particularly, the ethylene terpolymer resin (a) enables the use of low amounts of tackifying resin (b) in the adhesive composition. It preferably further enables the use of adhesive composition also in low or high temperature conditions and can thereby provide a broad/particular end application window to the adhesive composition.
In addition there are specific benefits using acrylates and/or silanes as comonomers. The acrylates are mainly selected due to better heat resistance compared e.g. with vinyl acetate (VA) containing ethylene copolymers, good performance in an adhesive composition, attractive cohesive properties, particularly at higher temperatures and also with high polarity. The ethylene terpolymer resins of the invention can be blended with acrylic copolymers and other components while keeping the major parts of the benefits mentioned above due to the inherent properties of the ethylene terpolymer.
The ethylene terpolymer resin (a) preferably has one or more, preferably all of the following properties:

1) a total comonomer, i.e. the combined amount of (ii) and (iii), content of from 10 to 40 wt%, preferably from 15 to 35 wt%, more preferably from 18 to 30 wt% of the total weight (100 wt%) of the ethylene terpolymer resin (a);
2) melting temperature of from 65 to 110 °C as measured according to ISO 11357-3;

3) $MFR_2$ of from 1 to 500 as determined according to ISO113, at a temperature of 190 °C and under load of 2.16 kg.

The ethylene terpolymer resin (a) generally has a melting temperature of from 65 to 110 °C, preferably of from 65 to 95 °C, more preferably of from 75 to 93 °C, most preferably of from 80 to 92 °C, when determined according to "DSC analysis" as described below under the "Determination method".

The ethylene terpolymer resin (a) generally has a crystallinity of from 15 to 45 %, preferably of from 18 to 35 %, more preferably of from 20 to 30 %, when determined according to "DSC analysis" as described below under the "Determination method".

The ethylene terpolymer resin (a) generally has a melt flow rate ($MFR_2$) of from 1 to 500 g/10 min as determined according to ISO 1133 and a load of 2.16 kg. Preferably, the melt flow rate ($MFR_2$) of the ethylene terpolymer resin (a) is from 3 to 450, more preferably from 5 to 400, more preferably 10 to 300, even more preferably from 15 to 200, yet even more preferably from 20 to 100, most preferably from 25 to 70 g/10 min, when measured from a non-crosslinked ethylene terpolymer resin (a) according to ISO 1133 at 190 °C and at a load of 2.16 kg. The $MFR_2$ for the ethylene terpolymer resin (a) is determined according "MFR" as described below under the "Determination method".

The ethylene terpolymer resin (a) generally has a density of from 920 to 965 $kg/m^3$, preferably of from 930 to 960 $kg/m^3$, more preferably of from 935 to 957 $kg/m^3$, when determined according to "Density" as described below under the "Determination method".

The ethylene terpolymer resin (a) generally has a tensile strength at break of from 2 to 10 MPa, preferably of from 3 to 8 MPa, more preferably of from 3.5 to 7 MPa, when determined according to "Tensile properties" as described below under the "Determination method".

(ii) ($C_{1-6}$)-alkyl acrylate and/or ($C_{1-6}$)-alkyl-($C_{1-6}$)-alkyl acrylate comonomer(s)

The present ethylene terpolymer resin (a) contains one or more, preferably one, ($C_{1-6}$)-alkyl acrylate and/or ($C_{1-6}$)-alkyl-($C_{1-6}$)-alkyl acrylate comonomer(s) (ii), preferably one or more ($C_{1-6}$)-alkyl acrylate comonomer(s).

The amount of the ($C_{1-6}$)-alkyl acrylate and/or ($C_{1-6}$)-alkyl-($C_{1-6}$)-alkyl acrylate comonomer(s) (ii) in the ethylene terpolymer resin (a) is preferably from 8 to 35 wt%, more preferably from 10 to 33 wt%, even more preferably from 12 to 30 wt%, most preferably from 20 to 30 wt% of the of the total weight (100 wt%) of the ethylene terpolymer resin (a). The amount of the ($C_{1-6}$)-alkyl acrylate and/or ($C_{1-6}$)-alkyl-($C_{1-6}$)-alkyl acrylate comonomer(s) (ii) in the ethylene terpolymer resin (a) is measured according to "Comonomer contents" as described below under the "Determination method".

The ($C_{1-6}$)-alkyl acrylate and/or ($C_{1-6}$)-alkyl-($C_{1-6}$)-alkyl acrylate comonomer(s) are preferably selected from a group consisting of methyl acrylate (MA) comonomer, ethyl acrylate (EA) comonomer, butyl acrylate (BA) comonomer and methyl methacrylate (MMA) comonomer.

The most preferred ($C_{1-6}$)-alkyl acrylate and/or ($C_{1-6}$)-alkyl-($C_{1-6}$)-alkyl acrylate comonomer (ii) is methyl acrylate (MA) comonomer. Methyl acrylate (MA) moiety in polymer chain is one of the most thermally stable among other acrylates in ester pyrolysis reactions. As a result, if the terpolymer (a) with MA comonomer degrades at high temperatures, then there is no harmful free acid (acrylic acid) formation thus improving the quality and life cycle of the article. This is not the case e.g. with vinyl acetate units of ethylene vinyl acetate (EVA) which thermally decomposes with the release of harmful acetic acid or with other acrylates like ethyl acrylate (EA) or butyl acrylate (BA) which, on the contrary, can go through the ester pyrolysis reaction, and if degrade, would form also volatile olefinic by-products.

(iii) Silane group(s) containing comonomer(s)

The present ethylene terpolymer resin (a) contains one or more, preferably one, silane group(s) containing comonomer(s) (iii).

The amount of the silane group(s) containing comonomer(s) (iii) in the ethylene terpolymer resin (a) is 0.5 to 10 wt% of the total weight (100 wt%) of the ethylene terpolymer resin (a). The amount of the silane group(s) containing comonomer(s) (iii) in the ethylene terpolymer resin (a) is preferably 2 to 10 wt%, more preferably 2.1 to 8 wt%, even more preferably 2.5 to 6 wt%, most preferably 3 to 5 wt%, of the total weight (100 wt%) of the ethylene terpolymer resin (a). The amount of the silane group(s) containing comonomer(s) (iii) in the ethylene terpolymer resin (a) is measured according to "Comonomer contents" as described below under the "Determination method".

The copolymerization of the silane group(s) containing comonomer(s) in the ethylene terpolymer resin (a) in the present amount surprisingly provides improved adhesion properties towards various substrates. The silane group(s) containing comonomer(s) (iii) are preferably selected from hydrolysable silane group(s) containing comonomer(s), more preferably from hydrolysable unsaturated silane group(s) containing comonomer(s); even more preferably from silane group containing olefin(s).

In particular the silane group(s) containing comonomer(s) (iii) is represented by formula (I)

$$CH_2=CHSi(OR)_3 \qquad (I)$$

wherein each R is independently selected from $C_{1-6}$-alkyl, preferably each R is independently methyl or ethyl.

Further particularly the silane group(s) containing comonomer(s) (iii) are selected from vinyl trialkoxysilane comonomer(s), preferably from a group consisting of vinyl trimethoxysilane (VTMS) comonomer, vinyl bismethoxyethoxysilane (VBMES), and vinyl triethoxysilane (VTES) comonomer.

The most preferred the silane group(s) containing comonomer (ii) is vinyl trimethoxysilane (VTMS) comonomer.

Polymerization process

The ethylene terpolymer resin (a) for use in the present adhesive composition generally is produced in polymerisation processes and under conditions well-known to the person skilled in the art of making propylene copolymers. The ethylene terpolymer resin (a) can be produced by copolymerising ethylene with the comonomers in the amounts further described herein.

The $(C_{1-6})$-alkyl acrylate and/or $(C_{1-6})$-alkyl-$(C_{1-6})$-alkyl acrylate comonomer(s) (ii) and silane group(s) containing comonomer(s) (iii) are copolymerized together with ethylene monomer to form the ethylene terpolymer resin (a).

The incorporation of the comonomer(s) as well as the control of the comonomer feed to obtain the desired final comonomer content can be carried out in a well-known manner and is within the skills of a skilled person.

In a preferable embodiment the ethylene terpolymer resin (a) is produced by polymerising ethylene with one or more, preferably one, $(C_{1-6})$-alkyl acrylate and/or $(C_{1-6})$-alkyl-$(C_{1-6})$-alkyl acrylate comonomer(s) (ii) and one or more, preferably one, silane group(s) containing comonomer(s) (iii) as defined herein in a high-pressure (HP) process using free radical polymerization in the presence of one or more initiator(s) and optionally using a chain transfer agent (CTA) to control the MFR of the polymer. The HP reactor can be e.g. a well-known tubular or autoclave reactor or a mixture thereof, suitably a tubular reactor. The high-pressure (HP) polymerisation and the adjustment of process conditions for further tailoring the other properties of the polymer depending on the desired end application are well known and described in the literature, and can readily be used by a skilled person. Suitable polymerisation temperatures range up to 400 °C, suitably from 80 to 350 °C and pressure from 70 MPa, suitably 100 to 400 MPa, suitably from 100 to 350 MPa. The high-pressure polymerization is generally performed at pressures of 100 to 400 MPa and at temperatures of 80 to 350 °C. Such processes are well known and well documented in the literature and will be further described later below.

Accordingly the ethylene terpolymer resin (a) is preferably a high pressure polyethylene (HPPE) terpolymer.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R. Klimesch, D. Littmann and F.-O. Mähling pp. 7181-7184.

Such HP polymerisation results in a so-called low-density polymer of ethylene (LDPE), with the comonomers (ii) and (iii) as defined herein. The term LDPE has a well-known meaning in the polymer field and describes the nature of polyethylene produced in HP, i.e. the typical features, such as different branching architecture, to distinguish the LDPE from PE produced in the presence of an olefin polymerisation catalyst (also known as a coordination catalyst). Although the term LDPE is an abbreviation for low-density polyethylene, the term is understood not to limit the density range of the polymer (a), but covers the LDPE-like HP polyethylenes with low, medium and higher densities.

Tackifying resin (b)

The amount of the tackifying resin (b) in the adhesive composition is 5 to 30 wt% of the total weight (100 wt%) of the adhesive composition. Preferably the amount of the tackifying resin (b) in the adhesive composition is 8 to 28 wt%, more preferably 10 to 25 wt%, more preferably from 10 to 22 wt%, yet even more preferably 15 to 20 wt%, of the total weight (100 wt%) of the adhesive composition.

The term "tackifying resin" has a well-known meaning in the field. Tackifying resin (b) of the polymer composition can be a molecule or a macromolecule. Generally, it is a chemical compound or a polymer of fairly low molecular weight (Mw), compared to common polymers. The polymer can be from a natural source or from a chemical process or combination thereof. The tackifying resin generally enhances the adhesion, mainly in the form of tack or stickiness to the substrates. This is particularly important during the forming of the bond with a final adhesive composition.

In conventional adhesive compositions the amount of tackifying resin is relatively high. The ethylene terpolymer resin (a) enables the use of low amounts of tackifying resin (b) in the adhesive composition.

The tackifying resin (b) is preferably selected from one or more of the commercially available tackifying resins.

Typically, the tackifying resin (b) is selected from aliphatic, aromatic, aliphatic/aromatic copolymer hydrocarbon or heterohydrocarbon resins or mixtures thereof; preferably from a group consisting of rosins and their derivates, terpenes and modified terpenes, $C_{5-10}$ aliphatic, cycloaliphatic and aromatic resins, hydrogenated hydrocarbon resins, and mixtures thereof.

Preferably, the tackifying resin (b) is a $C_{5-10}$ aliphatic or aromatic hydrocarbon. The $C_{5-10}$ aliphatic or aromatic hydrocarbon advantageously has a softening point 85 to 120 °C, more preferably 105 °C or less (ASTM D-6090-97). The $C_{5-10}$ aliphatic or aromatic hydrocarbon further advantageously has a number average molecular weight (Mn) of 300 to 2000 g/mol.

In particular, the tackifying resin (b) is a $C_{5-10}$ aliphatic or aromatic hydrocarbon, preferably a $C_{5-10}$ aliphatic or aromatic hydrocarbon having a number average molecular weight (Mn) of 300 to 2000 g/mol. In particular, the tackifying resin (b) is a $C_{5-10}$ aliphatic or aromatic hydrocarbon, preferably a $C_{5-10}$ aliphatic or aromatic hydrocarbon having a softening point 85 to 120 °C, more preferably 105 °C or less (ASTM D-6090-97).

Further particularly the tackifying resin (b) is selected from a group consisting of Escorez 1102 and Escorez 1304 supplied by ExxonMobil; $C_5$ aliphatic resins e.g. Piccotac 1020-E, Piccotac 1095-N and Piccotac 1100-E supplied by Eastman; $C_9$ aromatic resins e.g. Picco A-10 and Picco A100 supplied by Eastman; $C_5$ aliphatic/$C_9$ aromatic resins, e.g. Piccotac 6095-E, Piccotac 8090-E, and Piccotac 8095 supplied by Eastman and Super Nevtac 90 supplied by Neville, and polyterpene resins e.g. Piccolyte A115 supplied by Pinova. Preferably, the tackifying resin (b) is selected from a group consisting of $C_5$ aliphatic/$C_9$ aromatic resins, e.g. Piccotac 8090-E supplied by Eastman, and polyterpene resins e.g. Piccolyte A115 supplied by Pinova.

Plasticizer resin (c)

The amount of optional plasticizer resin (c) in the adhesive composition is 0 to 30 wt%, preferably 0 to 20 wt%, more preferably 1 to 10 wt%, even more preferably 3 to 5 wt% of the total weight (100 wt%) of the adhesive composition.

The plasticizer resin generally enhances the processability of the adhesive composition.

Surprisingly the addition of the plasticizer resin (c) to the adhesive composition increases the T-peel strength of the adhesive towards many substrates.

The optional plasticizer resin (c) is generally selected from oils and waxes; preferably selected from mineral-based oil, petroleum based oil, liquid resin, liquid elastomer, polybutene, polyisobutene, phthalate plasticizer, benzoate plasticizer, epoxidized soya oil, vegetal oil, olefin oligomer, low molecular weight polymer, solid plasticizer, wax and any mixtures thereof.

The term "wax" refers to an organic substance having a weight average molecular weight (Mw, GPC) of <10000 g/mol, which is solid at normal temperature and becomes liquid when heated, and is commonly considered a "wax". There is not a particular limitation on the type of wax as long as the adhesive composition according to the invention can be obtained. Examples of known and commercially available waxes include, but are not limited to, microcrystalline wax, synthetic wax and paraffin wax, such as Licowax PE520, Licocene PE5301, Licocene PE4201, Licocene PP1602 available from Clariant, and Primol 352 supplied by ExxonMobil.

The optional plasticizer (c) can also be e.g. a commercial plasticizer suitable for adhesive applications. As an example of such plasticizer (c) Platinol series available from BASF (phthalate based plasticizers) can be mentioned.

Antioxidant (d)

The amount of optional antioxidant(s) (e) in the adhesive composition is from 0 to 3 wt% of the total weight (100 wt%) of the adhesive composition. Preferably the amount of the antioxidant(s) (d) in the composition is from 0 to 2 wt%, more preferably from 0.05 to 2 wt%, even more preferably from 0.1 to 1 wt%, of the total weight (100 wt%) of the adhesive composition.

The antioxidant(s) are preferably selected from a group consisting of sterically hindered phenols, phosphites/phosphonites, sulphur containing antioxidants, alkyl radical scavengers, aromatic amines, hindered amine stabilizers, and any mixtures thereof.

Preferably the antioxidant (d) is pentaerythrityl-tetrakis(3-(3',5'-di-tert. butyl-4-hydroxyphenyl)propionate) (Irganox 1010) .

Additives (e)

The amount of optional additives (e) in the adhesive composition is from 0 to 5 wt% of the total weight (100 wt%) of the adhesive composition. Preferably the amount of the additives (e) in the adhesive composition is from 0 to 4 wt%, more preferably from 0 to 3 wt%, even more preferably from 0 to 2 wt%, of the total weight (100 wt%) of the adhesive composition.

The additives (e) of the polymer composition are e.g. conventional additives suitable for the desired end application and within the skills of a skilled person, including without limiting to, preferably at least UV light stabilizer(s) (for example hindered amine light stabilizers), and may also include inert colorants such as titanium dioxide, surfactants, fluorescing agents, scorch retardants, metal deactivator(s), nucleating agent(s), clarifier(s), brightener(s), acid scavenger(s), as well as slip agent(s) or talc etc, or any mixtures thereof.

Each additive can be used e.g. in conventional amounts, the total amount of additives present in the polymer composition being preferably as defined above. Such additives are generally commercially available and are described, for example, in "Plastic Additives Handbook", 5th edition, 2001 of Hans Zweifel.

Typically, no further polymer(s) as additive(s) (e) is present in the polymer composition.

Preferably, no additive(s) (e) is present in the polymer composition.

Components (a) - (e) are selected so that the sum of their amounts is 100 wt%.

The present composition is non-crosslinked. Accordingly, the present hot melt adhesive composition does not comprise crosslinking catalysts i.e. the optional additive (e) is not a crosslinking catalyst.

In a particular example the adhesive composition comprises,

(a) 60 to 95 wt% of an ethylene terpolymer resin (a) containing

(i) 55 to 91.5 wt%, preferably 60 to 90 wt% of units derived from ethylene of the total weight of the ethylene terpolymer resin (a),
(ii) 8 to 35 wt%, more preferably from 10 to 33 wt%, even more preferably from 12 to 30 wt%, most preferably from 20 to 30 wt% $(C_{1\text{-}6})$-alkyl acrylate and/or $(C_{1\text{-}6})$-alkyl-$(C_{1\text{-}6})$-alkyl acrylate comonomer(s) of the total weight of the ethylene terpolymer resin (a), and
(iii) 0.5 to 10 wt%, preferably 2 to 10 wt%, more preferably 2.1 to 8 wt%, even more preferably 2.5 to 6 wt%, most preferably 3 to 5 wt%, silane group(s) containing comonomer of the total weight of the ethylene terpolymer resin (a);

(b) 5 to 40 wt%, preferably 8 to 28 wt%, more preferably 10 to 25 wt%, even more preferably 15 to 20 wt%, of tackifying resin;
(c) 0 to 30 wt%, preferably 0 to 20 wt%, more preferably 1 to 10 wt%, even more preferably from 3 to 5 wt% of plasticiser resin;
(d) 0.1 to 3 wt% of antioxidant; and
(e) 0 to 5 wt% of additives

of the total weight (100 wt%) of the adhesive composition.

The present adhesive compositions as defined herein are suitable for use in adhesive end applications.

As is demonstrated in the Examples, the present adhesive compositions show a superior balance of properties of cohesive and adhesive properties such as low complex viscosity especially at a temperature range of 100 to 180 °C, a high maximum probe tack at an attractive temperature range and high peel strength.

The ethylene terpolymer resin (a) preferably has one or more, preferably all of the following properties:

1) Sum of components (a) and (b) from 90 to 99.5 wt% of the total weight of the adhesive composition;
2) The adhesive composition according to the invention preferably has a complex viscosity at 100 °C of from 400 to 2200 Pa*s;
3) The adhesive composition according to the invention preferably provides a T-peel strength of from 450 to 3500N/m;
4) The adhesive compostion according to the invention provides a maximum probe tack of from 820 to 2500 kPa.

Complex viscosity

The adhesive composition according to the invention preferably has a complex viscosity at 100°C of from 400 to 2200 Pa*s, more preferably of from 600 to 2100 Pa*s, most preferably from 1000 to 2000 Pa*s. The adhesive compositions according to the invention have improved processability due to low complex viscosities. Often a low complex viscosity is beneficial for the processability and to reduce it further could be advantageous for many applications, however not for all depending the application technique and type of substrate to bond.

T-peel strength

The adhesive composition according to the invention preferably provides a T-peel strength of from 450 to 3500 N/m, more preferably of from 800 to 3000 N/m, most preferably from 1200 to 2800 N/m, when the substrate is an atmospheric pressure plasma jet treated polypropylene film (APPJ PP) and when the adhesive composition is conditioned for 15 minutes at 25°C.

The adhesive compositions according to the invention can be used even in demanding applications because of the high T-peel strength. Another advantage is the ability to tailor the strength of the bond by an easy modification of the adhesive composition. This means that the same ethylene terpolymer resin can be used for many different applications e.g. by just adjusting the amount of the other components (b) - (e).

Probe tack

The adhesive composition according to the invention preferably provides a maximum probe tack of from 820 to 3000 kPa, preferably of from 850 to 2500 kPa, more preferably from 950 to 2000 kPa, most preferably of from 1000 to 1500 kPa, wherein the maximum probe tack is measured at a temperature of from 10 to 100 °C.

The higher the tack the higher is the stickiness of the adhesive composition to the substrate. In addition also less time of applied pressure would be required to make it stick properly.

Article

Further provided herein is an article comprising at least one substrate and an adhesive composition, as defined herein, on at least one surface of said substrate.

The article preferably comprises a multilayer element comprising

- a substrate;
- an adhesive layer on said substrate; and
- a top layer on said adhesive layer;

wherein the adhesive layer comprises the ethylene polymer composition as defined herein.

It is to be understood herein that the adhesive layer can be continuous or discontinuous layer, as well known for a skilled person in the art. Accordingly, the adhesive layer of the polymer composition can be applied on a substrate (or additionally to other optional layers of the article) continuously or discontinuously.

It is to be understood herein that the substrate and top layer can be in any order, i.e. the substrate can be the "inner layer" in the final article, then the top layer being the "upper" layer of the article, or vice versa. The decisive factor is that the adhesive layer is initially applied on the substrate and after that, the top layer is introduced on the other surface of the adhesive layer.

Moreover, e.g. in case of adhesive tape, wherein the tape is winded into a form of tape roll, then it is to be understood that the other surface of the substrate which does not contain the adhesive layer functions as the top layer which is contacted with the other side of the adhesive layer. Or in case of non-woven fiber article, then the fiber forming the non-woven article serves both as a substrate and as a top layer, and the adhesive layer can be continuously or discontinuously applied in the nonwoven fiber article. Accordingly, then the adhesive layer is continuously or discontinuously distributed in said non-woven article.

The substrate and the preferable top layer and optional other layers can be any material suitable and compatible for the polymer composition. The choice of the substrate and optional further layers depends on the article and end application thereof and is within the skills of a skilled person. It is to be understood that the substrate and the preferable multilayer element of the article can be of any shape, wherein the substrate has a surface on which the polymer composition can be applied. The optional top layer can then be applied on said adhesive layer. As non-limiting examples of the substrate a fiber, a film, a thread, a strip, a textile, a coating, a foil, a sheet, a board, a plate, a band, a container, like a bottle, or a package can be mentioned, and can be produced using any techniques, e.g. by extrusion or moulding. Furthermore, as non-limiting examples of such substrate material and optional, and preferable, top layer material, for instance, non-woven material, polymeric, elastomeric, wood, glass, paper, carton, metal, concrete and ceramic material can be mentioned. Any substrate material, optional, and preferable, top layer material, and form thereof can be used in any combination with the composition of the invention as the adhesive layer.

The adhesive layer preferably comprises at least 70 wt%, preferably at least 80 wt%, preferably at least 90 wt%, preferably 90 to 100 wt%, preferably consists of, the present adhesive composition.

It is understood that the multilayer element of the article may comprise further layers, depending on the desired end application of the article.

The article of the invention can be used in several adhesive applications. Illustrative adhesive applications of such an article include, but are not limited to, medical applications, construction applications, electrical applications, nonwoven material applications, food or general packaging applications, bookbinding applications, labelling, like bottle labelling applications and pressure sensitive applications. Accordingly, present article comprising the present adhesive composition as defined herein and at least one substrate can be chosen from a sanitary product (such as a disposable diaper a sanitary napkin, or a bed pad), a medical or surgical device (such as a bandage or a surgical drape), a tape, a film, a label, a sheet element (for example a plastic, a paper or a nonwoven (multilayer) sheet element), a container, like a bottle (for example a plastic or glass bottle), food package (for example a box) or a can; a board element (for example a cardboard or a wooden board), a case, a furniture or part thereof, a construction element, a vehicle, a book, a bag, a filter, an electrical device, a construction element, and a sport wear. Preferred articles are tapes, films, books and medical devices.

As said, preferably, the adhesive composition for the article can be produced at least partly separately before producing the article or in connection with the production process of said article. E.g. at least part of the components including ethylene terpolymer resin (a) of the adhesive composition can be combined together by the producer of the adhesive composition who supplies said composition to article producer (if not the same). In such case, the article producer can use the ready-made adhesive composition as such for producing the article or can introduce part of the components to the adhesive composition during the article production process. Alternatively, the article producer can combine all the components of the adhesive composition before or in connection with the article production process.

Provided herein is process for producing a present article as defined herein comprising the present adhesive composition as defined herein, wherein the process comprises the steps of:

(P-i) mixing, preferably melt-mixing the ethylene terpolymer resin (a), *part or all* of the components (b) to (e) of the adhesive composition at elevated temperature to form a melt mix of the polymer composition;
(P-ii) applying the obtained melt mix of the adhesive composition on at least one surface of a substrate to form an adhesive layer on the substrate;
(P-iii) optionally, and preferably, subjecting a top layer on the formed adhesive layer; and
(P-iv) recovering the obtained article.

It is to be understood that all the components of the adhesive composition can be added at step (P-i); or part of the components (b) to (d), e.g. part or all of the additives (e) can be added to the polymer composition e.g. at time of step (P-ii) or (P-iii), like during step (P-ii) of the process. Alternatively, part of the components can also be introduced to the adhesive composition after or during step (P-iv). For instance, e.g. part of the additives (e) may be previously introduced to the substrate and/or to the optional, and preferable, top layer, whereby after step (P-iv) said component(s) (a) and/or (b) can migrate to the adhesive composition from the substrate and/or the optional, and preferable, top layer of the article. All these alternatives are evident for a skilled person.

The term "melt-mixing at elevated temperature" is well-known procedure for a skilled person in the field. Accordingly, "melt-mixing at elevated temperature" herein refers to mixing above the melting or softening point of at least the major polymer component(s) of the obtained mixture and is carried out for example, without limiting to, in a temperature of at least 2 to 20°C above the melting or softening point of the polymer component(s). The melting point means melting temperature ($T_m$) according to determination method as described below under "Determination methods". The softening point of a material is the temperature at which a material softens sufficiently to allow significant flow under a low stress. Softening point of polymer component(s) is expressed herein as Vicat softening point as described below under "Determination methods".

The adhesive composition is preferably produced by melt-mixing the components in a conventional, e.g. commercially available, mixer, e.g. kneader, in a manner well known for a skilled person. If desired, the production of the adhesive composition may be carried out under inert atmosphere, by using an inert gas such as carbon dioxide or nitrogen, in order to protect said composition.

The resulting adhesive composition may then be applied at the step (P-ii) on the substrate using a variety of coating techniques depending on the desired article/adhesive application as well known and within the skills of a skilled person. Examples of coating techniques are: hot melt slot die coating, hot melt wheel coating, hot melt roller coating, melt blown coating and spray coating.

The application temperature at which the polymer composition is applied on a substrate during step (P-ii) is typically above the melting point (Tm) or softening point of the polymer composition and is within the skills of a skilled person. The application temperature at step (P-ii) can e.g. be selected to be above the melting point or softening point of the ethylene terpolymer resin (a).

Accordingly, for the adhesive composition according to this invention, the application temperature at step (P-ii) is preferably selected to be above the melting point of the main polymer component, which is most preferably the ethylene terpolymer resin (a). As an example, a suitable application temperature at step (P-i) can be between 70 to 130°C depending on the type of ethylene terpolymer resin (a). The application temperature at step (P-ii) is suitably in the range from 2 °C to 20 °C above the melting point of the ethylene terpolymer resin (a) and can be chosen by a skilled person.

DETERMINATION METHODS

Unless otherwise stated in the description or in the experimental part, the following methods were used for the property determinations of the polymer composition, polar polymer and/or any sample preparations thereof as specified in the text or experimental part.

Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C for polyethylene. MFR may be determined at different loadings such as 2.16 kg ($MFR_2$) or 5 kg (MFRs).

Density

The density of the polymer was measured according to ISO 1183-2. The sample preparation was executed according to ISO 1872-2:2007 Table 3 Q (compression moulding).

Comonomer contents

The content (wt% and mol%) of ($C_{1-6}$)-alkyl acrylate and/or ($C_{1-6}$)-alkyl-($C_{1-6}$)-alkyl acrylate comonomer(s) (ii) and the content (wt% and mol%) of silane group(s) containing comonomer(s) present in the adhesive composition (preferably in the ethylene terpolymer resin (a)):
Quantitative nuclear-magnetic resonance (NMR) spectroscopy was used to quantify the comonomer content of the polymers.
Quantitative $_1$H NMR spectra were recorded in the solution-state using a Bruker Advance III 400 NMR spectrometer operating at 400.15 MHz. All spectra were recorded using a standard broadband inverse 5 mm probe head at 100° C using nitrogen gas for all pneumatics. Approximately 200 mg of material was dissolved in *1,2*-tetrachloroethane-$d_2$ (TCE-$d_2$) using 2,6-Di-tert-butyl-4-methylphenol (BHT) (CAS 128-37-0) as stabiliser. Standard single-pulse excitation was employed utilising a 30 degree pulse, a relaxation delay of 3 s and no sample rotation. A total of 16 transients were acquired per spectra using 2 dummy scans. A total of 32k data points were collected per FID with a dwell time of 60 μs, which corresponded to a spectral window of approx. 20 ppm. The FID was then zero filled to 64k data points and an exponential window function applied with 0.3 Hz line broadening. This setup was chosen primarily for the ability to resolve the quantitative signals resulting from methyl acrylate and vinyl trimethoxysilane when present in the same polymer.
Quantitative $_1$H NMR spectra were processed, integrated and quantitative properties determined using custom spectral analysis automation programs. All chemical shifts were internally referenced to the residual protonated solvent signal at 5.95 ppm.
When present characteristic signals resulting from the incorporation of vinyl acetate (VA), methyl acrylate (MA), butyl acrylate (BA) and vinyl trimethoxysilane (VTMS), in various comonomer sequences, were observed (Randell89). All comonomer contents calculated with respect to all other monomers present in the polymer.
The vinyl acetate (VA) incorporation was quantified using the integral of the signal at 4.84 ppm assigned to the *VA sites, accounting for the number of reporting nuclie per comonomer and correcting for the overlap of the OH protons from BHT when present:

$$VA = ( I_{*VA} - (I_{ArBHT})/2) / 1$$

The methyl acrylate (MA) incorporation was quantified using the integral of the signal at 3.65 ppm assigned to the 1MA sites, accounting for the number of reporting nuclie per comonomer:

$$MA = I_{1MA} / 3$$

The butyl acrylate (BA) incorporation was quantified using the integral of the signal at 4.08 ppm assigned to the 4BA sites, accounting for the number of reporting nuclie per comonomer:

$$BA = I_{4BA} / 2$$

The vinyl trimethoxysilane (VTMS) incorporation was quantified using the integral of the signal at 3.56 ppm assigned to the 1VTMS sites, accounting for the number of reporting nuclei per comonomer:

$$\text{VTMS} = I_{1VTMS} / 9$$

Characteristic signals resulting from the additional use of BHT as stabiliser, were observed. The BHT content was quantified using the integral of the signal at 6.93 ppm assigned to the ArBHT sites, accounting for the number of reporting nuclei per molecule:

$$\text{BHT} = I_{ArBHT} / 2$$

The ethylene comonomer content was quantified using the integral of the bulk aliphatic (bulk) signal between 0.00 - 3.00 ppm. This integral may include the 1VA (3) and $\alpha$VA (2) sites from isolated vinyl acetate incorporation, *MA and $\alpha$MA sites from isolated methylacrylate incorporation, 1BA (3), 2BA (2), 3BA (2), *BA (1) and $\alpha$BA (2) sites from isolated butylacrylate incorporation, the *VTMS and $\alpha$VTMS sites from isolated vinyl silane incorporation and the aliphatic sites from BHT as well as the sites from polyethylene sequences. The total ethylene comonomer content was calculated based on the bulk integral and compensating for the observed comonomer sequences and BHT:

$$E = (1/4)*[ I_{bulk} - 5*VA - 3*MA - 10*BA - 3*VTMS - 21*BHT ]$$

It should be noted that half of the $\alpha$ signals in the bulk signal represent ethylene and not comonomer and that an insignificant error is introduced due to the inability to compensate for the two saturated chain ends (S) without associated branch sites.

The total mole fractions of a given monomer (M) in the polymer was calculated as:

$$fM = M / ( E + VA+ MA + BA + VTMS )$$

The total comonomer incorporation of a given monomer (M) in mole percent was calculated from the mole fractions in the standard manner:

$$M [mol\%] = 100 * fM$$

The total comonomer incorporation of a given monomer (M) in weight percent was calculated from the mole fractions and molecular weight of the monomer (MW) in the standard manner:

$$M [wt\%] = 100 * ( fM * MW) / ( (fVA * 86.09) + (fMA * 86.09) + (fBA * 128.17) + (fVTMS *$$

$$148.23) + ((1-fVA-fMA-fBA-fVTMS) * 28.05))$$

Rrandall89: J. Randall, Macromol. Sci., Rev. Macromol. Chem. Phys. 1989, C29, 201.

If characteristic signals from other specific chemical species are observed the logic of quantification and/or compensation can be extended in a similar manner to that used for the specifically described chemical species. That is, identification of characteristic signals, quantification by integration of a specific signal or signals, scaling for the number of reported nuclei and compensation in the bulk integral and related calculations. Although this process is specific to the specific chemical species in question the approach is based on the basic principles of quantitative NMR spectroscopy of polymers and thus can be implemented by a person skilled in the art as needed.

DSC analysis

The melting temperature (Tm), the crystallisation temperature (Tc) and crystallinity (CR %) were measured in TA Q2000 differential scanning calorimetry instrument (DSC) according to ISO 11357/3 on 5 to 10 mg samples. Crystallisation (Tc) and melting temperatures (Tm) were obtained in a heat/cool/heat cycle with a scan rate of 10 °C/min between 30 and 225 °C. Melting (Tm) and crystallisation (Tc) temperatures were taken as the peaks of the endotherms and exotherms in the second heating cycle and cooling cycle respectively.

Dynamic Mechanical Thermal Analysis (DMTA)

The storage modulus G', loss modulus G" and the glass transition temperature Tg were measured by DMTA analysis. The DMTA evaluation and the storage modulus G', measurements were carried out in torsion mode on compression moulded samples at temperature between -130 and +150 °C using a heating rate of 2 °C/min and a frequency of 1 Hz, according to ISO 6721-02 and ISO 6721-07. The measurements were carried out using Anton Paar MCR 301 equipment. The compressed moulded samples have the following dimensions: 40x10x1 mm and are prepared in accordance to ISO 1872-2:2007. The storage modulus G'23 and G'70 were measured at 23 °C and 70 °C respectively.

Vicat-A temperature

The Vicat-A temperature is determined according to ISO 306 (A50) using injection moulded test specimens having the following dimensions: 80x10x4 mm. The injection moulded test specimens are prepared as described in EN ISO 1873-2.

Melt viscosity

Melt viscosity is measured according to ASTM D-3236.

Plate-plate rheology for measuring complex viscosity

For monitoring the variation in the properties of HPPEs and HPPE hot melts, plate-plate rheology experiments were carried out. Bohlin CS50 rheometer (Bohlin Instruments Ltd., Gloucestershire, England) provided with Peltier plate of 68 mm diameter for controlling the temperature was used. An upper plate of 20 mm diameter was selected.

The Peltier plate was heated to 180 °C and 0.12-0.15 g (5-6 pellets) HPPE or HPPE hot melt was placed in the middle of the bottom plate heated at 180 °C under open air (40 % relative humidity). After 3 minutes at 180 °C, HPPE or HPPE hot melt was softened, and then was ready for setting the gap between the plates; the gap was set to 400 $\mu$m. The surplus material was removed mechanically by using spatula. Before the experiment starts, HPPE or HPPE hot melt in the gap was kept at 180 °C during 5 minutes for assuring that all mass was similarly softened. The total time under which HPPE or HPPE hot melt was maintained at 180 °C was 10 minutes.

Plate-plate rheological measurements were carried out by cooling down from 180 to 40 °C by using a cooling rate of 5 °C/min. The oscillation frequency was 1 Hz and the strain amplitude was 0.5 %. At least two measurements in two different samples were carried out for assuring reproducibility.

Probe tack

The probe tack of the samples was measured at different temperatures. The samples were placed on PP film (thickness: 150 $\mu$m) pieces of dimension 6 cm x 6 cm supported by means of double side tape (Miarco, Paterna, Spain) on stainless steel 304 plate having the same dimensions. Three pieces of Scotch tape (3M, Minnesota, USA) were placed over the sides of the PP film for adjusting the thickness to 200 $\mu$m. Around 0.1-0.2 g sample melted at 180 °C was applied on the square area in PP film and the piece was placed in oven at 100 °C for five minutes until homogeneous melting was produced. Then, the piece was covered with Teflon®film and placed in pneumatic press Muver (Francisco Muñoz Irles CB, Petrer, Alicante) heated at 100 °C and pressed at 4 kg/cm$^2$ for 10 seconds. Under these conditions, the thickness of the test sample was about 200 $\mu$m. The adhesive thickness was measured with Minitest 735 probe (ElektroPhysik, Cologne, Germany).

The probe tack of the samples was measured in TA-XT2i texture analyzer (Stable Micro Systems, Surrey, England) provided with a thermostatic chamber. Measurements were carried out by increasing the temperature in steps of 5 °C by using cylindrical end-flat steel probe rod of 3 mm diameter. Three replicates per measurement were carried out and averaged.

The end-flat stainless steel cylindrical probe was approached to the sample surface at a rate of 0.1 mm/s. Once the probe was in contact with the surface, a force of 5 N was applied during 1 second, and then the probe was removed from the sample surface at 10 mm/s. Tack was taken at the maximum of the Strength (N) over Strain (mm) curve.

Surface treatment of PP film substrates

In order to optimize adhesion, PP films were surface treated with atmospheric pressure plasma jet.

The surface treatment of PP film (300 $\mu$m) was carried out in Plasma Treat GmbH (Steinhagen, Germany) atmospheric pressure plasma jet (APPJ) device, operating at frequency of 17 kHz and high tension of 20 kV. APPJ system is provided with torch ending in rotating nozzle through which plasma species are expelled. The system contains an electronically speed-controlled platform, where PP film (300 $\mu$m) is placed. The dimensions of the PP film (300 $\mu$m) test samples were 3 cm x 14 cm. Before APPJ treatment, PP film (300 $\mu$m) was cleaned with isopropanol for removing grease and contaminants. 10 minutes later, PP film (300 $\mu$m) was placed over the steel plate of APPJ equipment.

Non-equilibrium discharge air plasma was generated at an air pressure of 2 bars inside the rotating nozzle (1,900 rpm) and expelled through a circular orifice onto PP film (300 $\mu$m) surface. APPJ treatment of PP film (300 $\mu$m) was carried out at speed of the platform of 2 m/min and distance of 1 cm between PP film (300 $\mu$m) surface and the plasma torch nozzle.

Two consecutive APPJ passes were carried out.

For assessing the effectiveness of APPJ treatment of PP film (300 $\mu$m), water contact angles were measured in ILMS 377 goniometer (GBX Instruments, Bourg de Peage, France) and droplet shape was analyzed with Digidrop® software. Droplets of 4 $\mu$L of ultrapure water were placed on the PP film (300 $\mu$m) surface, stabilizing the droplet for 30 seconds before measurement. The measurements were carried out at 25 °C and 40 % relative humidity, and at least five droplets of ultrapure water were placed on different zones of the same PP film (300 $\mu$m) surface, and the contact angles were measured on both sides of the droplets, averaging the results.

The durability of APPJ treated PP film is limited due to hydrophobic recovery. Therefore, the evolution of the water contact angle on APPJ treated PP film (300 $\mu$m) was monitored as a function of the time after APPJ treatment. The water contact angle on APPJ treated PP film (300 $\mu$m) does not change during 150 minutes (2h30min), but a sudden increase is produced after 4h30min. Therefore, the adhesive joints must be made in less than 2h30min after APPJ treatment of PP film (300 $\mu$m).

T-peel adhesion test

The adhesion properties of the samples were evaluated through T-peel tests of APPJ treated PP film (300 $\mu$m)/sample/APPJ treated PP film (300 $\mu$m) joints. About 0.4-0.7 g of HPPE-based hot melt was placed over of APPJ treated PP film and allowed to melt in an area of 3 cm x 10 cm. Afterwards, the other piece of APPJ treated PP film was placed over and placed in the oven set to 100 °C. The joint was pressed in 100 °C preheated plates of Muver 5056 pneumatic press (Francisco Muñoz Irles CB, Petrer, Alicante) at 4 kg/cm$^2$ for 10 seconds. The thicknesses of the adhesives in the joints were measured with Minitest 735 probe (ElektroPhysik, Cologne, Germany), and they were 200 $\pm$ 50 $\mu$m.

T-peel test was carried out in universal testing machine Instron 4411 (Buckinghamshire, England) and the pulling rate was 152 mm/min. Five replicates for each joint were carried out and averaged.

T-peel strength for the samples above RT was measured on specimens as follows: after joint formation the samples were conditioned for 15 min at room temperature.

Softening point

The softening point was measured in a Mettler Toledo FP900 Thermo System (Mettler Toledo GmbH Schwerzenbach, Germany) equipped with a FP83 drop-point cell in accordance with ASTM-E28.

The samples were placed in small cup-shaped holders of 6.35 mm diameter. A first heating sweep at a heating rate of 5 °C/min was carried out and afterwards another heating scan at a heating rate of 1 °C/min by beginning 5 °C below the softening point of the sample was carried out. Three replicates per sample were carried out and averaged.

Tensile properties

The tensile properties, the elongation at break (EAB), elongation at yield (EAY), tensile strength at break (TSB) and tensile strength at yield (TSY) are measured at 23 °C according to ISO 527-1:2012/ ISO 527-2:2012 on injection moulded specimens, type 1B, prepared according to ISO 527-2:2012 and using an extensometer (Method B) produced according to ISO 1873-2 with 4 mm sample thickness. The test speed was 50 mm/min, except for the tensile modulus (E) measurement that was carried out at a test speed of 1 mm/min.

EXAMPLES

Components of the adhesive compositions

Ethylene terpolymer resin (a)

Preparation of ethylene terpolymer resins (a) (Copolymer of ethylene (i) with methyl acrylate (MA) or, respectively, butyl acrylate (BA) comonomer (ii) and with vinyl trimethoxysilane (VTMS) comonomer (iii))

Polymerisation of the ethylene terpolymer resin (a) component:

Ethylene terpolymers (a) were produced in a commercial high pressure tubular reactor at a pressure 2500-3000 bar and max temperature 250-300 °C using conventional peroxide initiatior. Ethylene monomer (i), methyl acrylate (MA) or, respectively, butyl acrylate (BA) comonomer (ii) and vinyl trimethoxy silane (VTMS) comonomer (iii) were added to the reactor system in a conventional manner. CTA was used to regulate MFR as well known for a skilled person. After having the information of the property balance desired for the inventive final polymer (a) component, the skilled person can control the process to obtain the inventive polymer (a) component.

The amount of the components in wt% (MA (ii) and VTMS, (iii)) and properties of the terpolymer resin (a) are given in the Table 1.

The properties in below table were measured from the ethylene terpolymer resin (a) component as obtained from the reactor.

Table 1.

| Terpolymer Component | (a)1 | (a)2 | (a)3 |
|---|---|---|---|
| Ethylene monomer (i) | 74.9 | 72.5 | 71.5 |
| MA (ii) wt% | 22 | 23 | 26 |
| VTMS (iii) wt% | 3.1 | 4.5 | 2.5 |
| MFR$_2$ g/10 min | 33 | 62 | 18 |
| Density | 949 | 952 | 955 |
| Melting temperature °C | 91 | 85 | 85 |
| Crystallinity % | 26.9 | 22.0 | 25.5 |
| Crystallisation temperature °C | 75.9 | 69.6 | |
| Tensile strength at break MPa | 6.3 | 4.4 | |

Tackifying resins (b)

The following commercially available resins were used as tackifying resins:

(b)1: Piccotac 8090-E from Eastman (Brussels, Belgium). Its softening point is 88 - 96 °C.

(b)2: Piccolyte A115 from Pinova (Brunswick, USA) produced from high-purity *alpha*-pinene isolated from turpentine. Its softening point is 112-118 °C.

(b)3: Piccotac 1095-N, C5 aliphatic resins from Eastman (Brussels, Belgium). Its softening point is 96 °C.

(b)4: Escorez 2203LC, aromatic modified C5/C9 aliphatic resin from ExxonMobil (Irving, Texas, USA). Its softening point is 93 °C.

Plasticizer resins (c)

The following commercially available resins were used as plasticizer resins:

(c)1: Primol 352 from ExxonMobil (Irving, Texas, USA)

(c)2: Inter 3078 from Iberceras Specialties (Madrid, Spain)

Antioxidants (d)

The following commercially available product was used as antioxidant:
Irganox 1010 from BASF (Ludwigshafen, Germany)

Additives (e)

No additives were used in the examples.

Preparation of the adhesive compositions

The synthesis of adhesive compositions was carried out at 190 °C in a glass beaker covered with glass lid placed on hot plate surrounded by ceramic blanket. The empty glass beaker was heated at 190 °C under dry nitrogen during 10 minutes and then 70 g of HPPE terpolymer was introduced into the glass beaker, allowing it to melt at 190 °C under dry nitrogen for 7 minutes. Then, 20-30 wt% of tackifier and 0.5 wt% of antioxidant were added into the glass beaker, and heated at 190 °C under dry nitrogen during 7 minutes. After that the mixture was stirred with an anchor stirrer coupled to Hei-Torque 200 (Heidolph, Schwabach, Germany) at 35 rpm and 190 °C for 10 minutes. 5 wt% of plasticiser was then added, if present in the composition, and the mixture was stirred at 35 rpm and 190 °C for 7 minutes.

Table 2: Amount of components of the inventive adhesive compositions in wt% of the total weight (100 wt%) of the inventive adhesive composition and measured properties of the inventive adhesive compositions.

| Component | IE1 | IE2 | IE3 | IE4 | IE5 | IE6 | IE7 |
|---|---|---|---|---|---|---|---|
| Terpolymer (a) wt% | (a)1 79.5 | (a)1 69.5 | (a)1 79.5 | (a)1 79.5 | (a)1 74.5 | (a)1 74.5 | (a)1 79.5 |
| Tackifying resin (b) wt% | (b)2 20 | (b)2 30 | (b)3 20 | (b)1 20 | (b)1 20 | b)1 20 | (b)4 20 |
| Plasticizer resin (c) wt% | - | - | - | - | (c)1 5 | (c)2 5 | - |
| Antioxidant (d) wt% | 0.5 | 0.5 | 0.5 | 0.5 | 0.5 | 0.5 | 0.5 |
| Additives (e) wt% | - | - | - | - | - | - | - |

| | | | | | | | |
|---|---|---|---|---|---|---|---|
| Complex viscosity at 100°C, Pa*s | 1405 | 1160 | 1243 | 1435 | 1220 | 811 | 1669 |
| Complex viscosity at 120°C, Pa*s | 780 | 619 | 700 | 817 | 720 | 477 | 990 |
| Complex viscosity at 140°C, Pa*s | 458 | 351 | 406 | 483 | 431 | 285 | 597 |
| Complex viscosity at 160°C, Pa*s | 272 | 202 | 241 | 292 | 265 | 171 | 368 |
| Complex viscosity at 180°C, Pa*s | 188 | 131 | 160 | 197 | 181 | 110 | 249 |
| Max probe tack to PP, kPa | 1029 | 824 | 865 | 1239 | - | - | 1027 |
| Max probe tack to PP, Temperature °C | 70 | 70 | 65 | 60 | | | 70 |
| T-peel strength of APPJ PP joints after 15 min of cooling to room temperature after joint formation, N/m. | 1548 | 1403 | 489 | 1677 | 2796 | 1334 | 635 |
| Storage modulus G' cross-over, kPa | 20 | 19 | 20 | 18 | | | 18 |
| Storage modulus T cross-over, °C | 73 | 72 | 75 | 76 | | | 78 |

Table 2, cont.

| Component | IE8 | IE9 | IE10 | IE11 | IE12 |
|---|---|---|---|---|---|
| Terpolymer (a) wt% | (a)2 79.5 | (a)2 69.5 | (a)2 79.5 | (a)3 79.5 | (a)2 79.5 |
| Tackifying resin (b) wt% | (b)2 20 | (b)2 30 | (b)1 20 | (b)1 20 | (b)4 20 |
| Plasticizer resin (c) wt% | - | - | - | - | - |
| Antioxidant (d) wt% | 0.5 | 0.5 | 0.5 | 0.5 | 0.5 |
| Additives (e) wt% | - | - | - | - | - |
| Complex viscosity at 100°C, Pa*s | 1388 | 1177 | 1889 | 2011 | 1721 |
| Complex viscosity at 120°C, Pa*s | 776 | 616 | 1139 | 1156 | 1032 |
| Complex viscosity at 140°C, Pa*s | 460 | 344 | 714 | 689 | 641 |
| Complex viscosity at 160°C, Pa*s | 276 | 196 | 450 | 416 | 404 |

| | | | | | |
|---|---|---|---|---|---|
| Complex viscosity at 180°C, Pa*s | 190 | 127 | 309 | 270 | 270 |
| Max probe tack to PP, kPa | 856 | 1395 | 991 | 1063 | 1038 |
| Max probe tack to PP, Temperature °C | 60 | 55 | 60 | 60 | 60 |
| T-peel strength of APPJ PP joints after 15 min of cooling to room temperature after joint formation, N/m. | 1252 | | 1316 | 1100 | 1917 |
| Storage modulus G' cross-over, kPa | 20 | 17 | 19 | 22 | 18 |
| Storage modulus T cross-over, °C | 71 | 74 | 76 | 72 | 76 |

The adhesive compositions of IE1-12 were compared in the following with commercially available or referential hot melt adhesive compositions. The following commercially available or referential hot melt adhesive compositions were examined:

CE1: Mere terpolymer (a)1

CE2: Mere terpolymer (a)2

CE3: Mere terpolymer (a)3

CE4: Swift® lock 2682 from H.B. Fuller (Minnesota, USA); reactive polyurethane (PUR)

CE5: Scotch-Weld 3748 from 3M (Minnesota, USA); PP base resin

CE6: Technomelt Supra 350HT from Henkel (Düsseldorf, Germany); PE base resin

Table 3: Amount of components of the comparative adhesive compositions in wt% of the total weight (100 wt%) of the comparative adhesive composition and measured properties of the comparative compositions.

| Component | CE1 | CE2 | CE3 | CE4 | CE5 | CE6 |
|---|---|---|---|---|---|---|
| Terpolymer (a) wt% | (a)1 | (a)2 | (a)3 | - | - | - |
| Tackifying resin (b) wt% | - | - | - | | | |
| Plasticizer resin (c) wt% | - | - | - | | | |
| Antioxidant (d) wt% | - | - | - | | | |
| Additives (e) wt% | - | - | - | | | |
| Complex viscosity at 100°C, Pa*s | 2928 | 2695 | 4034 | | | |
| Complex viscosity at 120°C, Pa*s | 1843 | 1655 | 2555 | | | |
| Complex viscosity at 140°C, Pa*s | 1198 | 1129 | 1658 | | | |
| Complex viscosity at 160°C, Pa*s | 781 | 751 | 1075 | | | |
| Complex viscosity at 180°C, Pa*s | 538 | 527 | 736 | | | |
| Max probe tack to PP, kPa | 192 | 298 | 208 | 803 | 513 | 321 |
| Max probe tack to PP, Temperature °C | 75 | 90 | 60 | 75 | 75 | 90 |
| T-peel strength of APPJ PP joints after 15 min of cooling to room temperature after joint formation, N/m. | 1133 | 926 | 1091 | 181 | 339 | 180 |
| Storage modulus G' cross-over, kPa | 20 | 21 | 24 | | | |
| Storage modulus T cross-over, °C | 84 | 80 | 89 | | | |

The inventive adhesive compositions have decreased viscosity values compared to comparative compositions. This means that the inventive compositions have improved processability. IE5 and IE6 show that addition of plasticizer resin (c), especially (c)2, gives even more improved viscosity values.

The inventive adhesive compositions have improved probe tack values over the comparative compositions. High tack values are important e.g. in pressure sensitive applications.

The inventive adhesive compositions have lower storage modulus G' T cross-over values over the comparative compositions. Lower storage modulus G' T cross-over values are important for increasing the open and setting times of the hot melt adhesives e.g. upon application the repositioning of the substrates in the adhesive joints can be extended.

Adhesive properties of the inventive compositions stay on good level. This can be seen in T-peel results. Most of the compositions have even improved T-peel values.

**Claims**

1. An adhesive composition, comprising

    (a) 60 to 95 wt% of an ethylene terpolymer resin containing

(i) 55 to 91.5 wt% of units derived from ethylene of the total weight of the ethylene terpolymer resin (a),

(ii) 8 to 35 wt% of $(C_{1-6})$-alkyl acrylate and/or $(C_{1-6})$-alkyl-$(C_{1-6})$-alkyl acrylate comonomer(s) of the total weight of the ethylene terpolymer resin (a), and

(iii) 0.5 to 10 wt% silane group(s) containing comonomer of the total weight of the ethylene terpolymer resin (a);

(b) 5 to 40 wt% of tackifying resin;
(c) 0 to 30 wt% of plasticizer resin;
(d) 0 to 3 wt% of antioxidant(s); and
(e) 0 to 5 wt% of additives

of the total weight (100 wt%) of the adhesive composition;

wherein the melt flow rate ($MFR_2$) of the ethylene terpolymer resin (a) is from 1 to 500 g/10 min as determined according to ISO 1133 and a load of 2.16 kg.

2. An adhesive composition as claimed in claim 1, wherein the composition comprises 8 to 28 wt%, preferably 10 to 25 wt%, more preferably 15 to 20 wt%, tackifying resin (b) of the total weight (100 wt%) of the adhesive composition.

3. An adhesive composition as claimed in claim 1 or 2, wherein the tackifying resin is a $C_{5-10}$ aliphatic or aromatic hydrocarbon; preferably a $C_{5-10}$ aliphatic or aromatic hydrocarbon advantageously having a softening point of 85 to 120 °C and/or a number average molecular weight (Mn) of 300 to 2000 g/mol.

4. An adhesive composition as claimed in any one of claims 1 to 3, wherein the plasticizer resin (c) is selected from oils and waxes and/or the adhesive composition comprises 1 to 10 wt%, preferably 3 to 5 wt% of plasticizer resin (c) of the total weight (100 wt%) of the adhesive composition.

5. An adhesive composition as claimed in any one of claims 1 to 4, wherein the adhesive composition is non-crosslinked.

6. An adhesive composition as claimed in any one of claims 1 to 5, wherein the adhesive composition comprises from 10 to 33 wt%, preferably from 12 to 30 wt%, more preferably from 20 to 30 wt% of $(C_{1-6})$-alkyl acrylate and/or $(C_{1-6})$-alkyl-$(C_{1-6})$-alkyl acrylate comonomer(s) (ii) of the total weight (100 wt%) of the ethylene terpolymer resin (a).

7. An adhesive composition as claimed in any one of claims 1 to 6, wherein the $(C_{1-6})$-alkyl acrylate and/or $(C_{1-6})$-alkyl-$(C_{1-6})$-alkyl acrylate comonomer(s) (ii) are selected from a group consisting of methyl acrylate (MA) comonomer, ethyl acrylate (EA) comonomer, butyl acrylate (BA) comonomer and methyl methacrylate (MMA) comonomer, preferably the $(C_{1-6})$-alkyl acrylate and/or $(C_{1-6})$-alkyl-$(C_{1-6})$-alkyl acrylate comonomer(s) (ii) is methyl acrylate (MA).

8. An adhesive composition as claimed in any one of claims 1 to 7, wherein the adhesive composition comprises 2 to 10 wt%, preferably 2.1 to 8 wt%, more preferably 2.5 to 6 wt%, most preferably 3 to 5 wt% of silane group(s) containing comonomer (iii) of the total weight (100 wt%) of the ethylene terpolymer resin (a).

9. An adhesive composition as claimed in any one of claims 1 to 8, wherein the silane group(s) comonomer(s) (iii) are selected from hydrolysable silane group(s) containing comonomer(s), preferably from hydrolysable unsaturated silane group(s) containing comonomer(s); more preferably from silane group containing olefin(s).

10. An adhesive composition as claimed in claim 9, wherein the silane group(s) containing comonomer (iii) is represented by formula (I)

$$CH_2=CHSi(OR)_3 \qquad (I)$$

wherein each R is independently selected from $C_{1-6}$-alkyl, preferably each R is independently methyl or ethyl.

11. An adhesive composition as claimed in claim 10, wherein the silane group(s) containing comonomer(s) (iii) are selected from vinyl trialkoxysilane comonomer(s), preferably from a group consisting of vinyl trimethoxysilane (VTMS) comonomer, vinyl bismethoxyethoxysilane (VBMES), and vinyl triethoxysilane (VTES) comonomer.

12. An adhesive composition as claimed in any one of claims 1 to 11, wherein the adhesive composition comprises,

(a) 60 to 95 wt% of an ethylene terpolymer resin containing

    (i) 55 to 91.5 wt%, preferably 60 to 90 wt% of units derived from ethylene of the total weight of the ethylene terpolymer resin (a),
    (ii) 8 to 35 wt%, preferably from 10 to 33 wt%, more preferably from 12 to 30 wt%, most preferably from 20 to 30 wt% of $(C_{1\text{-}6})$-alkyl acrylate and/or $(C_{1\text{-}6})$-alkyl-$(C_{1\text{-}6})$-alkyl acrylate comonomer(s) of the total weight of the ethylene terpolymer resin (a), and
    (iii) 0.5 to 10 wt%, preferably 2 to 10 wt%, more preferably 2.1 to 8 wt%, even more preferably 2.5 to 6 wt%, most preferably 3 to 5 wt% of silane group(s) containing comonomer of the total weight of the ethylene terpolymer resin (a);

(b) 5 to 40 wt%, preferably 8 to 28 wt%, more preferably 10 to 25 wt%, even more preferably 15 to 20 wt% of tackifying resin;
(c) 0 to 30 wt%, preferably 0 to 20 wt%, more preferably 1 to 10 wt%, even more preferably 3 to 5 wt% of plasticizer resin;
(d) 0.01 to 3 wt% of antioxidant; and
(e) 0 to 5 wt% of additives

of the total weight (100 wt%) of the adhesive composition;
wherein the melt flow rate ($MFR_2$) of the ethylene terpolymer resin (a) is from 1 to 500 g/10 min as determined according to ISO 1133 and a load of 2.16 kg; and maximum probe tack of the adhesive composition is from 820 to 3000 kPa.

**13.** An adhesive composition as claimed in any one of claims 1 to 12, having a T-peel strength of from 450 to 3500 N/m, preferably from 800 to 3000 N/m, more preferably from 1200 to 2800 N/m when the substrate is an atmospheric pressure plasma jet treated polypropylene film (APPJ PP); and/or
having a complex viscosity at 100 °C of from 400 to 2200 Pa*s, more preferably from 600 to 2100 Pa*s, most preferably from 1000 to 2000 Pa*s; and/or
having a maximum probe tack of from 820 to 3000 kPa, preferably from 850 to 2500 kPa, more preferably from 950 to 2000 kPa, most preferably from 1000 to 1500 kPa.

**14.** An article comprising at least one substrate and an adhesive composition as defined in any one of claims 1 to 13 on at least one surface of said substrate.

**15.** Use of an adhesive composition as defined in any one of claims 1 to 13 as a pressure sensitive adhesive and/or a hot melt adhesive for the preparation of an article.

Europäisches
Patentamt

European
Patent Office

Office européen
des brevets

## EUROPEAN SEARCH REPORT

Application Number

EP 20 38 2011

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2018/099816 A1 (BOREALIS AG [AT]) 7 June 2018 (2018-06-07) * claims 1,8 * * examples 1,2 * * table 1 * * page 1, line 3 - line 4 * * page 14, line 19 - line 23 * * page 15, line 17 * * page 21, line 22 - page 22, line 7 * * page 22, line 9 - line 11 * * page 23, line 16 - line 18 * ----- | 1-15 | INV. C09J123/08 C08F210/02 C08F220/14 C08F220/12 C08F230/08 |
| X | WO 2017/207370 A1 (BOREALIS AG [AT]) 7 December 2017 (2017-12-07) * claim 1 * * examples 1,2 * * table 1 * * page 1, line 3 - line 4 * * page 17, line 19 - line 23 * * page 20, line 12 * * page 20, line 20 - line 32 * * page 21, line 1 * * page 42, line 20 - page 43, line 2 * ----- | 1-15 | |

TECHNICAL FIELDS
SEARCHED       (IPC)

C09J
C08F

The present search report has been drawn up for all claims

| Place of search | Date of completion of the search | Examiner |
|---|---|---|
| Munich | 10 June 2020 | van Bergen, Marc |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 38 2011

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2020

| Patent document cited in search report | Publication date | Patent family member(s) | Publication date |
|---|---|---|---|
| WO 2018099816 A1 | 07-06-2018 | CA 3044157 A1 | 07-06-2018 |
| | | CN 110023085 A | 16-07-2019 |
| | | EP 3548282 A1 | 09-10-2019 |
| | | JP 2020513430 A | 14-05-2020 |
| | | US 2020095483 A1 | 26-03-2020 |
| | | WO 2018099816 A1 | 07-06-2018 |
| WO 2017207370 A1 | 07-12-2017 | AU 2017273755 A1 | 27-09-2018 |
| | | AU 2020201399 A1 | 12-03-2020 |
| | | BR 112018069435 A2 | 12-02-2019 |
| | | CA 3024778 A1 | 07-12-2017 |
| | | CN 109153897 A | 04-01-2019 |
| | | EA 201892620 A1 | 28-06-2019 |
| | | EP 3464499 A1 | 10-04-2019 |
| | | JP 2019518107 A | 27-06-2019 |
| | | US 2019218380 A1 | 18-07-2019 |
| | | WO 2017207370 A1 | 07-12-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018099816 A

**Non-patent literature cited in the description**

- Encyclopedia of Polymer Science and Engineering. 1986, vol. 6, 383-410
- Polyethylene: High-pressure. **R. KLIMESCH, D ; LITTMANN ; F.-O. MÄHLING.** Encyclopedia of Materials: Science and Technology. Elsevier Science Ltd, 2001, 7181-7184
- Plastic Additives Handbook. Hans Zweifel, 2001
- **J. RANDALL.** Rrandall89. *Macromol. Sci., Rev. Macromol. Chem. Phys.,* 1989, vol. C29, 201